# EUROPÄISCHE PATENTANMELDUNG

(11) **EP 1 138 567 A2**
(43) Veröffentlichungstag der Anmeldung: **04.10.2001**
(21) Anmeldenummer: 01107113.1
(22) Anmeldetag: 22.03.2001
(51) Int. Cl.: B61D 17/04, B61D 17/00, B62D 31/02

(54) **Modular aufgebauter Wagenkasten eines Schienenfahrzeuges in Faserverbundbauweise**

(30) Priorität: 29.03.2000 DE 10015663
(71) Anmelder: Siemens Duewag Schienenfahrzeuge GmbH, 47829 Krefeld (DE); Invent GmbH, 38100 Braunschweig (DE)
(72) Erfinder: Calomfirescu, Mihail, Dipl.-Ing., 45359 Essen (DE); Unckenbold, Wilm Felix, Dr.-Ing., 38102 Braunschweig (DE)

(57) **Zusammenfassung**

Bei einem modular aufgebauten Wagenkasten eines Schienenfahrzeuges in Faserverbundbauweise ist die hochbeanspruchte Tragstruktur des Wagenkastens aus standardisierten Modulen - wie Dachplatte (1), Obergurt (2), Fenstersäule (3), Türpfosten (4), Seitenwandträger (5), Bodenplatte (6), Treppenmodul (7) - gebildet, wobei diese Module vereinheitlichte Schnittstellen aufweisen.

## Beschreibung

Die Erfindung betrifft einen modular aufgebauten Wagenkasten eines Schienenfahrzeuges in Faserverbundbauweise

Modular aufgebaute Wagenkästen sind grundsätzlich bekannt. Aus der Vielzahl von Kunden mit individuellen Anforderungen an das jeweilige Design des Zugverbandes resultieren relativ geringe Stückzahlen von gleichartigen Wagenkästen. Von daher und im Hinblick auf den im Schienenfahrzeugbau üblicherweise herrschenden Termin- und Kostendruck sind neuartige Fertigungskonzepte in Verbindung mit innovativen Baukastensystemen notwendig, die eine hohe Flexibilität besitzen.

Ein wesentliches Charakteristikum von flexiblen Baukastensystemen ist ein hoher Grad der Modularisierung. Die daraus resultierende Vielzahl von universell einsetzbaren Standard-Halbzeugen führt aufgrund der hiermit einher gehenden Zunahme von Interfacebereichen zwischen den einzelnen Bauelementen oftmals zu einer Vergrößerung des Strukturgewichtes. Deshalb erfordern gerade flexible Baukastensysteme eine fortschrittsorientierte Konzeption und Konstruktion mit modernen Leichtbau-Werkstoffen wie Faserverbund-Werkstoffe.

Der Erfindung liegt die Aufgabe zugrunde, auf möglichst einfache und vom Gewicht her günstige Weise die hoch beanspruchte Tragstruktur eines Wagenkastens aus einheitlichen Module in Faserverbundbauweise darzustellen.

Diese Aufgabe wird erfindungsgemäß dadurch gelöst, dass die hochbeanspruchte Tragstruktur des Wagenkastens aus standardisierten Modulen - wie Dachplatte, Obergurt, Fenstersäule, Türpfosten, Seitenwandträger, Bodenplatte, Treppenmodul - mit vereinheitlichten Schnittstellen gebildet ist.

Vorteilhafte Ausgestaltungen der Erfindung sind in den Unteransprüchen angegeben.

Im weiteren wird die Erfindung anhand eines Ausführungsbeispielen näher beschrieben, die in der Zeichnung prinzipartig dargestellt sind. Es zeigen
- Fig. 1: einen modular aufgebauten Wagenkasten in perspektivischer Explosionsansicht im Halbschnitt,
- Fig. 2: den Wagenkasten nach Fig. 1 in montiertem Zustand,
- Fig. 3: eine Hälfte des Rohbau-Wagenkastens im Querschnitt,
- Fig. 4: einen Obergurt des Wagenkastens in 3D-Ansicht,
- Fig. 5: den Obergurt nach Fig. 4 im Querschnitt,
- Fig. 6: eine Dachplatte des Wagenkastens im Querschnitt senkrecht zur Längsrichtung,
- Fig. 7: die Dachplatte nach Fig. 6 im Querschnitt in Längsrichtung,
- Fig. 8: eine Fenstersäule des Wagenkastens in 3D-Ansicht,
- Fig. 9: einen Teilbereich der Fenstersäule nach Fig. 8 mit einer möglichen Geometrie einer Übergangslasche,
- Fig. 10: die Fenstersäule nach Fig. 8 im Querschnitt,
- Fig. 11: den unteren Bereich eines Türpfostens im Querschnitt,
- Fig. 12: einen Seitenwandträger des Wagenkastens in 3D-Ansicht,
- Fig. 13: den Eckbereich einer Bodenplatte und einer Seitenwand des Wagenkastens mit einer dort befindlichen Hakenverbindung,
- Fig. 14: eine Verbindung von zwei Strukturelementen im Bereich von Anschlusszapfen,
- Fig. 15: eine Bodenplatte des Wagenkastens im Querschnitt senkrecht zur Längsrichtung (Hochflur),
- Fig. 16: einen Querschnitt der Bodenplatte in Längsrichtung,
- Fig. 17: ein Treppenmodul des Wagenkastens,
- Fig. 18: ein Montagesystem des Wagenkastens mit funktionalen Elementen.

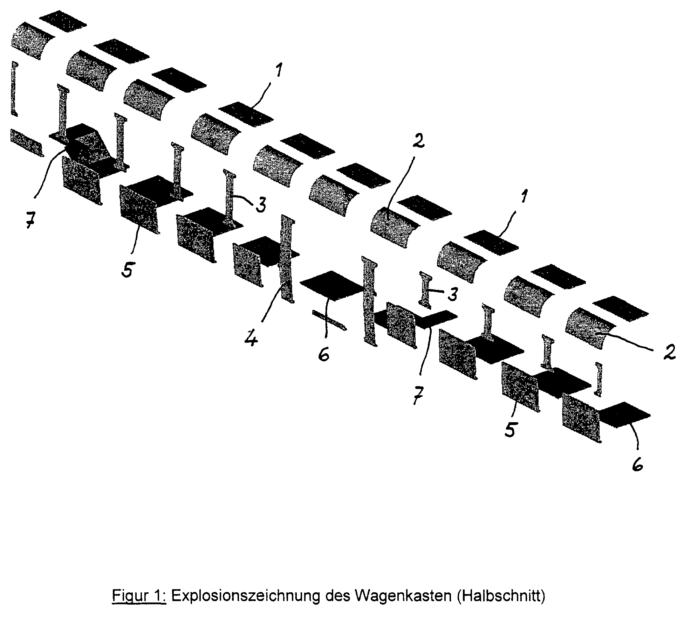

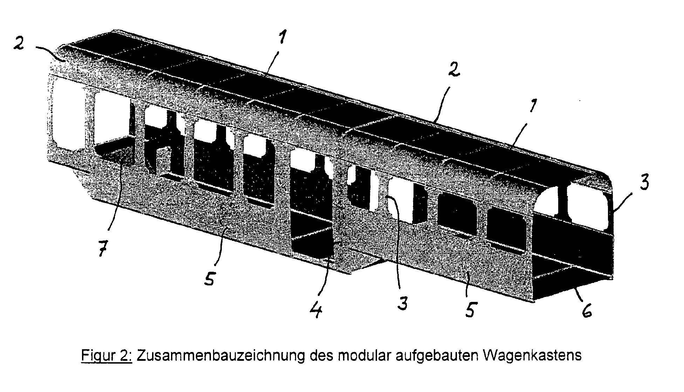

Die in Fig. 1 und 2 dargestellte Tragstruktur des Wagenkastens ist in einzelne Sektionen gegliedert, die im wesentlichen durch die Fensterteilung in einem Hochflurbereich und in einem Niederflurbereich sowie durch die Anordnung von Einstiegszonen charakterisiert sind. Jede Sektion besteht aus folgenden, standardisierten Strukturelementen: Dachplatte 1, Obergurt 2, Fenstersäule 3 bzw. Türpfosten 4, Seitenwandträger 5, Bodenplatte 6 bzw. Treppenmodul 7. Die Anzahl bzw. die Größe dieser Strukturelemente kann nach Bedarf variiert werden, um für eine bestimmte Seriengröße von Wagenkästen das wirtschaftliche Optimum zu erreichen. So ist insbesondere der Fig. 1 zu entnehmen, dass z. B. die Seitenwandträger 5 unterschiedliche Baulängen oder die Fenstersäulen 3 - entsprechend dem Hochflurbereich bzw. dem Niederflurbereich - verschiedene Bauhöhen aufweisen können.

Der prinzipielle Aufbau der Strukturelemente ist für alle Ausführungen der Wagenkästen identisch, so dass die einzelnen Strukturelemente über standardisierte Schnittstellen durch z. B. Klebeverbindungen und/oder Schraubverbindungen zur gesamten Tragstruktur zusammen gefügt werden können. Die Strukturelemente repräsentieren jeweils den für Faserverbund-Strukturen vorteilhaften hohen Integrationsgrad, der beispielsweise im Fall der Seitenwandträger 5 und der Obergurte 2 durch die Integration von hoch belastbaren UD-Zuggurten bzw. UD-Druckgurten in CFK-Bauweise realisiert wird, wobei "UD" eine unidirektionale Ausrichtung der Fasern bedeutet.

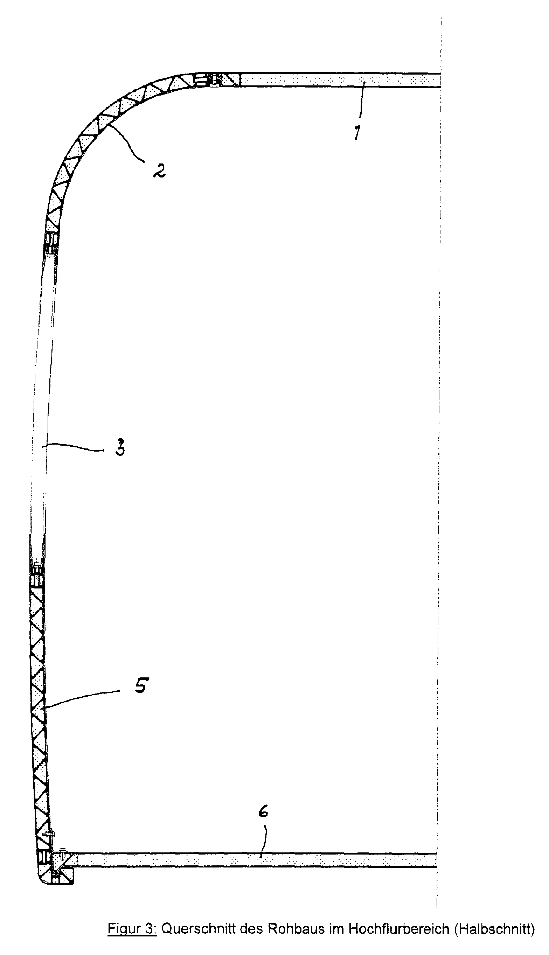

Die Faserverbund-Strukturen werden weitestgehend als Sandwich mit verlorenem Schaumkern ausgeführt, wobei die Schubstege in die Richtung der größten Strukturabmessung eines Moduls orientiert sind (siehe Fig. 3). Zur Steigerung der globalen Biegesteifigkeit des Wagenkastenquerschnittes werden in den Übergangsbereichen des Obergurtes 2 zu der Dachplatte 1 und den Fenstersäulen 3 bzw. Türpfosten 4 hochbeanspruchbare CFK-Gurte in die Sandwichstruktur integriert, die im wesentlichen durch eine in Längsrichtung des Wagenkastens wirkende Druckbeanspruchung belastet werden. Diese Gurte weisen somit eine überwiegend unidirektionale Faserorientierung in Längsrichtung auf. Die Gurte können auch in der Bauform als Zugschlaufe mit integriertem Druckstab und metallischen Inserts ausgeführt werden. Alternativ zur Verwendung eines Inserts kann die Lasteinleitung auch als CFK-Titan-Hybridbauweise realisiert werden.

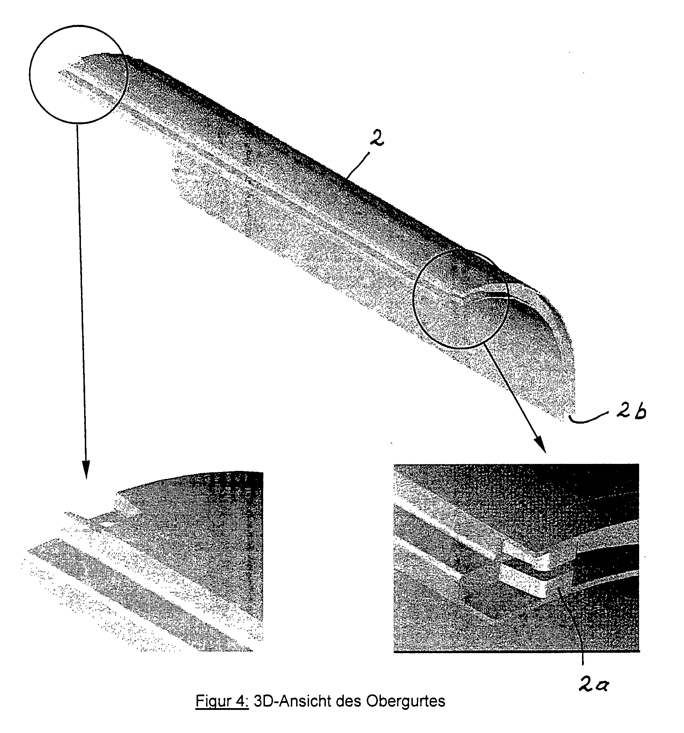

Die in Fig. 4 am Beispiel eines Obergurtes 2 gezeigten Anschlußzapfen 2a der UD-Gurte werden geometrisch als Nut-/Federverbindung ausgeführt. Hierdurch erfolgt die Kraftübertragung zwischen zwei Obergurten 2 sowohl durch Kraftschluss - beispielsweise über einen von innen verschraubten Passbolzen - als auch durch Formschluss über die keilförmig ausgebildete Geometrie der Anschlusszapfen 2a der vier UD-Gurte.

Im Hinblick auf eine definierte Selbstzentrierung der Obergurte 2 sind die beiden Stirnseiten ebenfalls als Nut-/Feder-verbindung ausgeführt. Die hieraus resultierenden Fügelippen ermöglichen neben einer Vereinfachung der Montage eine Abdichtung des Fügespaltes durch z. B. Klebstoff.

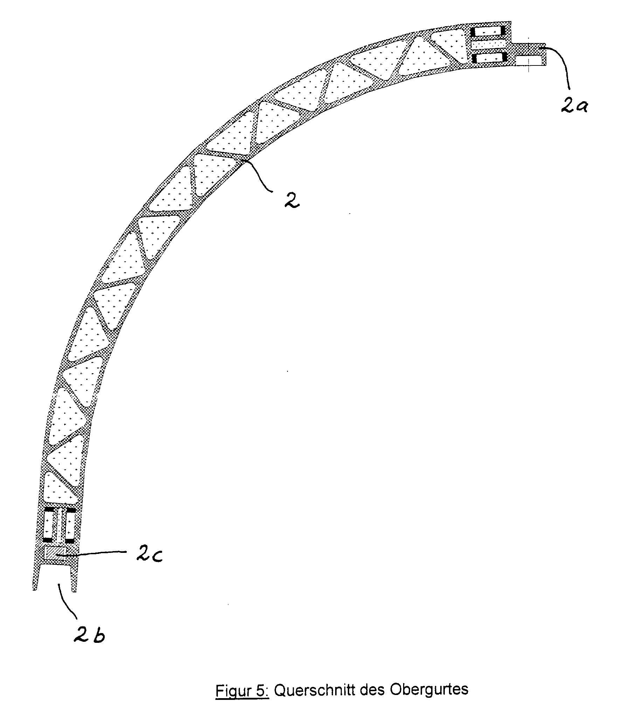

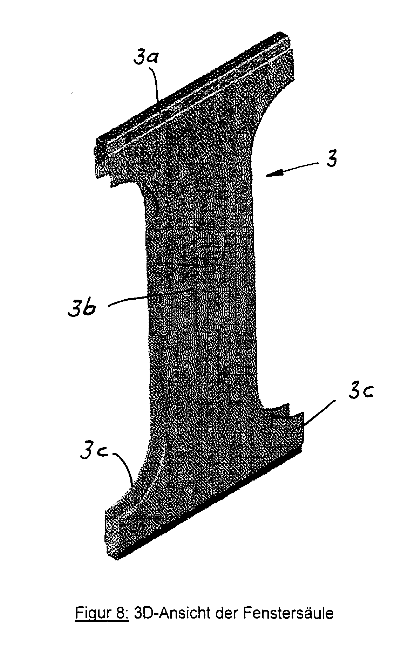

Die Anbindung der Fenstersäulen 3 bzw. der Türpfosten 4 an die Obergurte 2 erfolgt über trapezförmige Federn 3a (Fig. 8), die in eine trapezförmige Nut 2b an der Unterseite der Obergurte 2 (Fig. 5) eingreifen. Dort ist ein in Längsrichtung durchgehend verlaufendes metallisches Insert 2c in die Faserverbundstruktur der Obergurte 2 zwischen den unteren UD-Gurten und dem Nutgrund integriert, in welches für eine Verschraubung der Fenstersäulen 3 bzw. der Türpfosten 4 mit den Obergurten 2 nachträglich Gewinde geschnitten werden.

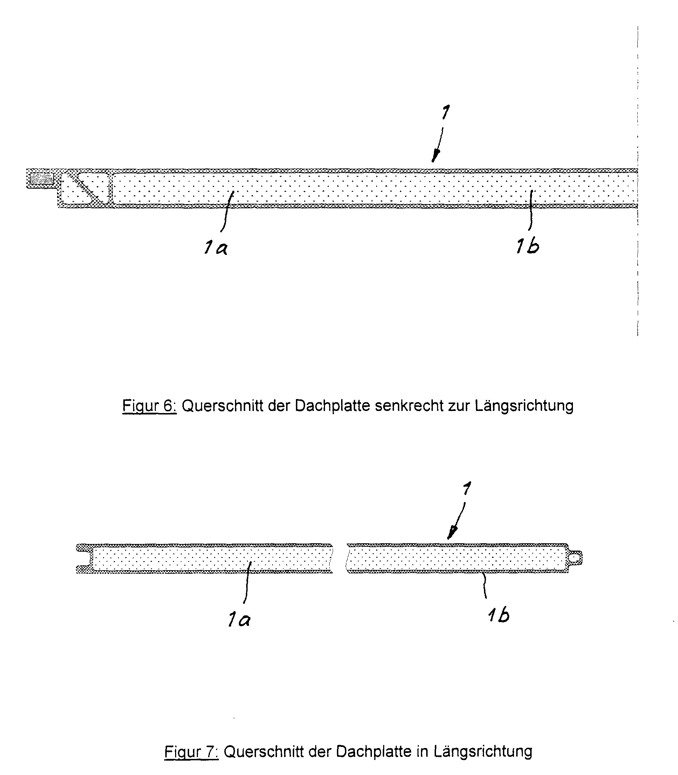

Die Struktur der in Fig. 6 und 7 gezeigten Dachplatten 1 besteht im wesentlichen aus einem Schaumkern 1a, der beidseitig mit laminierten Faserverbundschichten 1b eingefasst ist.

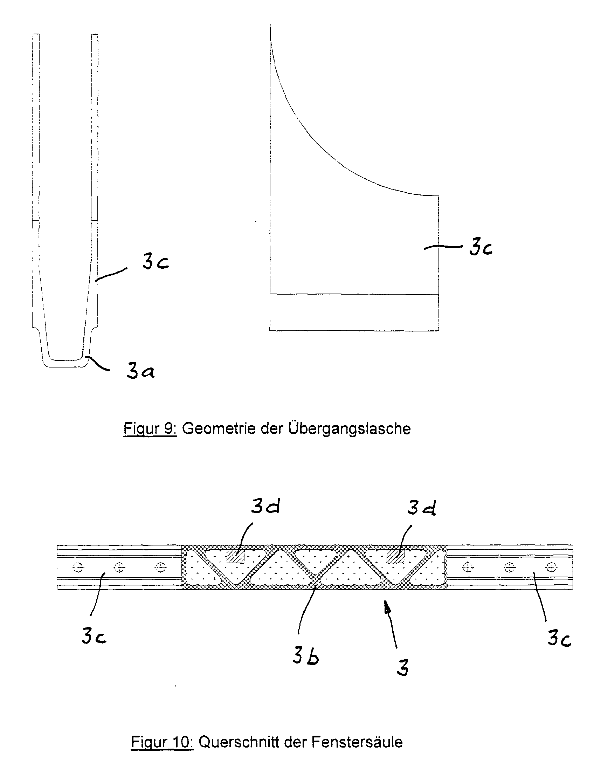

Die Geometrie der Fenstersäule 3 ergibt sich im wesentlichen aus einer zentralen Tragstruktur 3b mit einer über die Höhe konstanten Breite (Fig. 8). In diesem Bereich wird die Fenstersäule 3 als Sandwich mit starren Schubstegen und verlorenem Schaumkern ausgeführt, wobei die Schubstege in der Hochachse des Wagenkastens orientiert sind (siehe auch Fig. 10).

Zur Verschraubung der Fenstersäule 3 mit dem Obergurt 2 oder dem Seitenwandträger 5 werden an den Ecken der Fenstersäule 3 befindliche Übergangslaschen 3c mit U-förmigem Querschnitt vorgesehen, die fertigungstechnisch durch eine Verbreiterung der Deckschichten des Sandwich erzeugt werden (Fig. 9). Die konstruktive Ausführung der oberen Stirnseite und der unteren Stirnseite der Fenstersäule 3 erfolgt in Form der bereits erwähnten Feder 3a, die entsprechend der Geometrie der oberen Stirnseite und der unteren Stirnseite der trapezförmigen Nut 2b im Obergurt 2 bzw. Seitenwandträger 5 gestaltet ist.

Die in Fig. 10 dargestellten metallischen Inserts 3d verlaufen in der Hochachse über die gesamte Höhe der Fenstersäule 3, so dass z. B. Gepäckablagen und andere Komponenten der Innenverkleidung oder Klimakanäle mit großer Flexibilität von innen mit der Fenstersäule 3 verschraubt werden können.

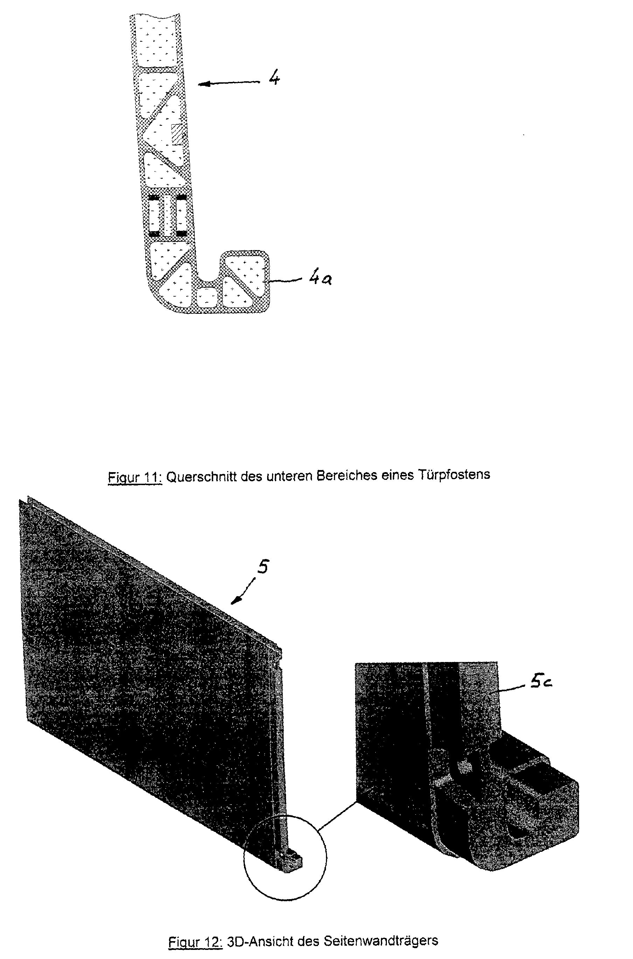

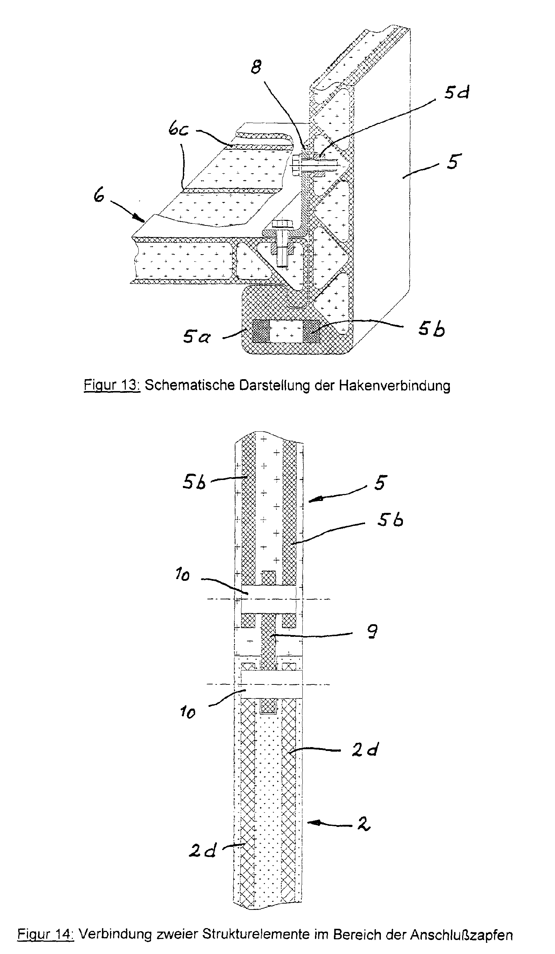

Entsprechend den Fig. 11 und 13 erfolgt die formschlüssige Anbindung der Bodenplatte 6 an die Türpfosten 4 und die Seitenwandträger 5 mittels einer jeweiligen hakenförmigen Struktur 4a oder 5a, die im unteren Bereich der Türpfosten 4 bzw. der Seitenwandträger 5 ausgebildet ist . In diesem Bereich verlaufen die Schubstege in Längsrichtung des Wagenkastens.

Zur Steigerung der globalen Biegesteifigkeit des Wagenkastenquerschnittes werden in den Übergangsbereichen der Seitenwandträger 5 zu den Fenstersäulen 3 und den Bodenplatten 6 hoch beanspruchbare CFK-Gurte 5b in die Sandwichstruktur integriert, die im wesentlichen durch eine in Längsrichtung wirkende Zugbeanspruchung belastet werden. Diese Gurte 5b weisen somit eine überwiegend unidirektionale Faserorientierung in Längsrichtung auf und werden in der Bauform als Zugschlaufe mit integriertem Druckstab und metallischen Inserts ausgeführt. Alternativ zur Verwendung eines Inserts kann die Lasteinleitung auch als CFK-Titan-Hybridbauweise realisiert werden.

Die Anschlusszapfen 5c der vier UD-Gurte eines Seitenwandträgers 5 werden der Fig. 12 entsprechend geometrisch als Nut-/Federverbindung ausgeführt. Hierdurch erfolgt die Kraftübertragung zwischen zwei Seitenwandträgern 5 sowohl durch Kraftschluss als auch durch Formschluss über die keilförmig ausgeführte Geometrie der Anschlusszapfen der vier UD-Gurte.

Die in Fig. 13 gezeigte formschlüssige Anbindung der Bodenplatte 6 an die Seitenwandträger 5 des Wagenkastens erfolgt mittels der hakenförmigen Struktur 5a im unteren Bereich der Seitenwandträger 5. Die Verschraubung des in Fig. 13 dargestellten Winkels 8 mit dem Seitenwandträger 5 erfolgt über in Längsrichtung durchgehend verlaufende metallische Inserts 5d, in das die Einschraubgewinde ebenfalls nachträglich geschnitten werden.

Die Übertragung der Kräfte durch die Seitenwandträger 5 und Obergurte 2 erfolgt mit Hilfe der durchgängig in Längsrichtung verlaufenden UD-Gurte 5b bzw. 2d. Im Fall der als Nut ausgeführten Stirnseite wird der Abschluss dieser UD-Gurte 5b und 2d durch die zugehörigen Anschlusszapfen 5c und 2a gebildet. Diese greifen lediglich in die entsprechenden Nuten des benachbarten Strukturelementes ein. Bei der in Fig. 14 dargestellten Verbindung ist für eine Übertragung besonders hoher Kräfte ein separater UD-Gurt 9 im Bereich der Lasteinleitung des Seitenwandträgers 5 über einen Bolzen 10 integriert. Die Anbindung des UD-Gurtes 9 an den Obergurt 2 erfolgt über einen zweiten in der Sandwichstruktur integrierten Bolzen 10, der wiederum mit den beiden in Längsrichtung verlaufenden UD-Gurten 2d verbunden ist.

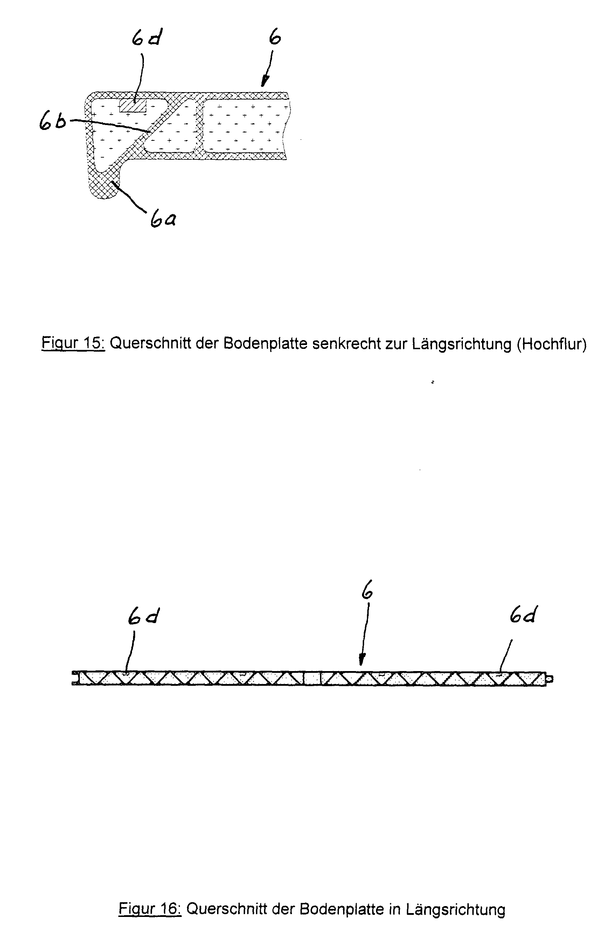

Die Faserverbundstruktur der in den Fig. 15 und 16 dargestellten Bodenplatte 6 wird als Sandwich mit starren Schubstegen und verlorenen Schaumkernen ausgeführt. Mit Ausnahme der hakenförmigen Endabschnitte 6a, in denen die Versteifungsrippen 6b in Längsrichtung orientiert sind, verlaufen die Schubstege 6c (siehe Fig. 13) aufgrund der äußeren Plattenabmessungen in Richtung der Breite eines Wagenkastens.

Die aus Fig. 15 und Fig. 16 ersichtlichen metallischen Inserts 6d verlaufen zwischen den hakenförmigen Endabschnitten 6a über die gesamte Breite der Bodenplatte 6, so dass z. B. Komponenten der Innenausstattung, insbesondere Fahrgastsitze, mit großer Flexibilität mit der Bodenplatte 6 verschraubt werden können.

Für den Aufbau eines Wagenkastens werden im Rahmen des verstehend beschriebenen Konzeptes zwei Treppenmodule 7 benötigt, die den Übergang von den Bodenplatten 6 des Hochflurbereiches zu denen des Niederflurbereiches darstellen. Aufgrund des unterschiedlichen Höhenniveaus und der von außen auf die Bodenstruktur einwirkenden Längsdruckkräfte sind insbesondere die Treppenmodule 7 aus strukturmechanischer Sicht als hoch beansprucht zu betrachten.

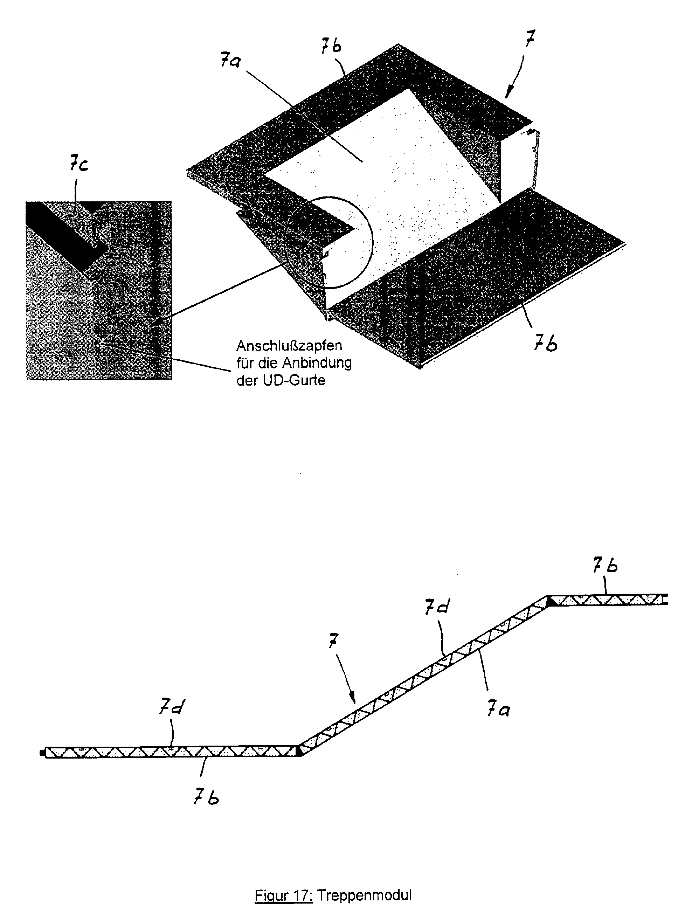

Die Faserverbundstruktur des in Fig. 17 exemplarisch dargestellten Treppenmoduls 7 wird daher weitgehend monolitisch in einem Fertigungsablauf als Sandwich mit starren Schubstegen und verlorenen Schaumkernen ausgeführt. Mit Ausnahme der hakenförmigen Endabschnitte 7c, in denen die Versteifungsrippen in Längsrichtung orientiert sind, verlaufen die Schubstege in der Rampe 7a und in den angeformten Bodenplattensegmenten 7b des Treppenmoduls 7 in Breitenrichtung. Metallische Inserts 7d dienen auch hier Zwecken der Befestigung, z. B. von Treppenstufen.

Im Hinblick auf die Montage wird folgendes erläutert:

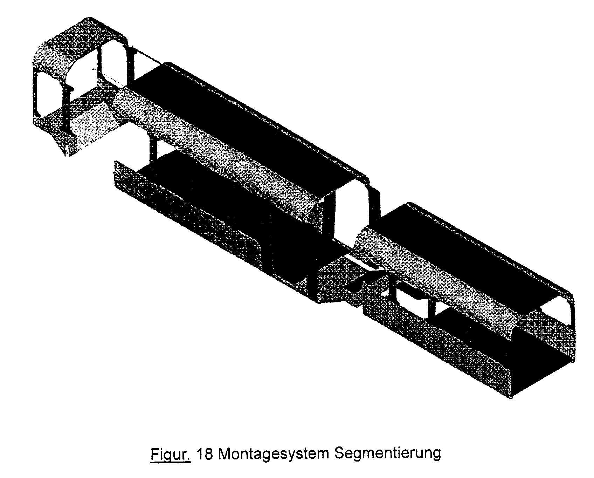

Das Konzept aus standardisierten Modulen eröffnet neue Möglichkeiten für den Zusammenbau des Wagens, das eine Flexibilisierung der Abläufe im Herstellungsprozess mit sich bringt. Exemplarisch sind nachstehend zwei Varianten näher beschrieben.
- A.: Zusammenbau des gesamten Wagens durch sequentielle Einbringung von Modulen. Für diesen Arbeitsschritt sind keine Montagevorrichtungen notwendig, was ein Sparpotenzial gegenüber der herkömmlichen Bauweise darstellt.
- B.: Als zweite Variante wird eine Segmentierung in Betracht gezogen. Die Module werden zusammengefügt, um funktionale Segmente zu bilden, die mit Fenstern und Innenverkleidung bis hin zur Verkabelung ausgestattet sind. Es kann sich beispielsweise um Hochflur-, Niederflur- und Vorbautensegmente handeln, die anschließend zusammengefügt werden (siehe dazu Fig. 18).

Es sind mehrere andere Varianten möglich, deren Auswahl von Stückzahl, Komplexibilität und Durchlaufzeit der Wagen abhängen.

### Liste der Bezugszeichen

- 1: Dachplatte
- 1a: Schaumkern
- 1b: Faserverbundschicht
- 2: Obergurt
- 2a: Anschlusszapfen
- 2b: trapezförmige Nut
- 2c: metallisches Insert
- 2d: UD-Gurt
- 3: Fenstersäule
- 3a: trapezförmige Feder
- 3b: zentrale Tragstruktur
- 3c: Übergangslasche
- 3d: metallisches Insert
- 4: Türpfosten
- 4a: hakenförmige Struktur
- 5: Seitenwandträger
- 5a: hakenförmige Struktur
- 5b: CFK-Gurt/UD-Gurt
- 5c: Anschlusszapfen
- 5d: metallisches Insert
- 6: Bodenplatte
- 6a: hakenförmiger Ensabschnitt
- 6b: Versteifungsrippe
- 6c: Schubsteg
- 6d: metallisches Insert
- 7: Treppenmodul
- 7a: Rampe
- 7b: Bodenplattensegment
- 7c: hakenförmiger Endabschnitt
- 7d: metallisches Insert
- 8: Winkel
- 9: separater UD-Gurt
- 10: Bolzen

## Patentansprüche

1. Modular aufgebauter Wagenkasten eines Schienenfahrzeuges in Faserverbundbauweise, **dadurch gekennzeichnet, dass** die hochbeanspruchte Tragstruktur des Wagenkastens aus standardisierten Modulen - wie Dachplatte (1), Obergurt (2), Fenstersäule (3), Türpfosten (4), Seitenwandträger (5), Bodenplatte (6), Treppenmodul (7) - mit vereinheitlichten Schnittstellen gebildet ist.

2. Wagenkasten nach Anspruch 1, **dadurch gekennzeichnet, dass** unterschiedliche Varianten von Wagenkästen durch entsprechende Kombinationen der standardisierten Module erzeugbar sind.

3. Wagenkasten nach Anspruch 1 oder 2, **dadurch gekennzeichnet, dass** die standardisierten Module zu Wagenkastensegmenten zusammen gefasst werden.
